# EUROPEAN PATENT SPECIFICATION

(11) **EP 0 368 126 B1**
(45) Date of publication and mention of the grant of the patent: **29.12.1993**
(21) Application number: 89120200.4
(22) Date of filing: 31.10.1989
(51) Int. Cl.: B23K 35/30, C22C 5/08

(54) **Silver-copper-aluminum-titanium brazing alloy**
Silber-Kupfer-Aluminium-Titan-Hartlotlegierung
Alliage argent-cuivre-aluminium-titane pour brasage

(30) Priority: 07.11.1988 US 267885
(43) Date of publication of application: 16.05.1990
(73) Proprietor: THE MORGAN CRUCIBLE COMPANY PLC, Windsor, Berkshire SL4 1EP (GB)
(72) Inventor: Mizuhara, Howard, Hillsborough, CA 94010 (US)
(74) Representative: Boff, James Charles

(56) References cited:
- EP-A- 0 135 603
- EP-A- 0 264 643
- DE-B- 1 030 756
- JP-A-42 061 877
- US-A- 4 775 511
- PATENT ABSTRACTS OF JAPAN, vol. 5, no. 33 (M-57)[705], 28th February 1981;
- & JP-A-55 158 895 (TANAKA KIKINZOKU KOGYO) 10-12-1980

## Description

This invention concerns copper-silver brazing materials (e.g. alloys containing titanium as an active metal for brazing, for example, to ceramics. Such brasing alloys are disclosed in U.S. patents 4,766,041, 4,735,866, 4,698,271, 4,684,579, 4,643,875, 4,623,513, 4,591,535, 4,448,853, 3,455,663; in U.K. patents 2,167,989, 1,270,477, 932,729; in Canada patent 559,434; in European patent 0 038 584; in German Auslegeschrift DE-B-1 030 756; in France patent 1 174 330. These brazing alloys do not generally have satisfactory oxidation resistance at temperatures as high as 700°C.

JP-42-61877 describes strong, age-hardened silver alloys, consisting of (in weight %) more than 1-8% Al, more than 3-less than 10% Cu, and optionally 0.05-3% of one or more of Ti, Si, Cr, or Zr.

A brazing material in accordance with this invention has the following composition, in weight percent; 0.5 to 3% titanium; 0.25 to 2% aluminium, silicon or tin; 2 to 6% copper; balance silver and incidental impurities. The alloy has good oxidation resistance at temperatures as high as 700°C.

The invention further provides a brazing material as defined above in which the brazing material is an alloy, e.g. in the form of a foil.

A brazing material according to the invention may, for example, be formed from a mixture of an alloy of silver, copper, and aluminium or silicon mixed with titanium hydride powder.

The invention also provides a method of brazing comprising the use of a brazing material as defined above.

In the following examples, the compositions are expressed in weight percent.

### EXAMPLE 1

An alloy with a composition of 92.5% Ag, 5% Cu, 1.5% Ti, 1% Al was melted on a copper hearth using a tungsten electrode. The alloy button was rolled to a 2 mil (0.05mm) thickness foil. A type 410 stainless steel rod, 1/4" diameter by 0.3" long, (6.35mm by 7.62mm) was placed on top of a thermally treated A1-500 alumina slab measuring 1-1/4" square (31.75mm square) by 80 mils (2.03mm) thick with a 1/2" square (12,7mm²) preform of the 2 mil (0,05mm)foil therebetween. The assembly was brazed at 920°C by 10 minute soak under 10⁻⁵ torr vacuum (1,332·10⁻⁵ mbar). The rod was joined to the alumina substrate with a full fillet. The melted alloy was bright and with metallic luster.

### EXAMPLE 2

An alloy with a composition of 93.25% silver, 5% copper, 0.25% aluminum, 1.5% titanium was prepared and tested as in Example 1.

The melted alloy did bond the stainless steel rod to the alumina substrate; however the alloy did not form a fillet.

### EXAMPLE 3

An alloy with a composition of 92.5% silver, 5% copper, 1% tin, 1.5% titanium was prepared and tested as in Example 1.

A good bond of the rod to the alumina substrate resulted; however the fillet was smaller than that obtained in Example 1.

### EXAMPLE 4

A 2 mil (0,051mm) thick foil of 92.5% Ag, 5% Cu, 1% Al, 1.5% Ti alloy was placed on a silicon nitride substrate with an Inconel 718 1/4" x 1/4" (6,35mm x 6,35mm) cell honeycomb on top. The assembly was brazed at 920°C under 10⁻⁵ torr (1,332·10⁻⁵ mbar) vacuum. An excellent braze resulted with a small fillet forming between the honeycomb and the silicon nitride.

### EXAMPLE 5

An atomized alloy powder of silver, copper and aluminum was mixed with titanium hydride powder such that the final composition was about 92.5% Ag, 5% Cu, 1% Al, 1.5% Ti. The powder mixture was mixed with a screening oil in a ratio of 95% metal powder, 5% oil. The mix was screened through a 105 mesh screen on to a zirconia substate and dried for one hour at 100°C. The coated ceramic was heated at 925°C in 10⁻⁵ torr (1,332·10⁻⁵ mbar) vacuum to melt the powder. An excellent 2 mil (0,05mm) thickness coated zirconia resulted.

### EXAMPLE 6

An atomized powder with a size of minus 270 mesh with a composition of 93.9% silver, 5.1% copper, and 1% silicon was blended with titanium hydride minus 325 mesh powder. The ratio used was 98.5% of silver alloy to 1.5% titanium hydride. The mix was compacted in a flat die at 5000 psi (34 MPa) followed by rolling from about 1/4" (6,35mm) to 4 mil (0,10mm) with two intermediate anneals. The foil was placed between 1" (25,4mm) diameter x 1/4" (6,35mm) alumina disc, and 1/4" (6,35mm) diameter x 1/2" (12,7mm) long 410 stainless steel rod. The assembly was brazed at 925°C under 10⁻⁵ torr (1,332·10⁻⁵ mbar) vacuum forming an excellent bond.

**TABLE 1**

| Sample | Compositions | | | | | | Liq/Sol°C |
|---|---|---|---|---|---|---|---|
| | Ag | Cu | Si | Al | Ti | Sn | |
| A | 92.5 | 5 | | | 1.5 | 1 | 914/857 |
| B | 92.5 | 5 | | 1 | 1.5 | | 909/863 |
| C | 93.0 | 5 | | 0.5 | 1.5 | | 914/866 |
| D | 93.25 | 5 | | 0.25 | 1.5 | | 916/867 |
| E | 92.5 | 5 | 1 | | 1.5 | | 907/872 |

Table 1 shows compositional and liquidus and solidus temperatures for examples within this invention.

## Claims

1. A brazing material consisting of, in weight percent,
0.5 - 3% titanium
0.25 - 2% aluminium, tin or silicon
2 - 6% copper
the balance being silver and incidental impurities.

2. A brazing material as claimed in claim 1 in which the brazing material is an alloy.

3. A brazing material according to claim 2 in which the alloy is in the form of a foil.

4. A brazing material as claimed in claim 1 in which the brazing material is formed from a mixture of an alloy of silver, copper and aluminium mixed with titanium hydride powder.

5. A brazing material as claimed in claim 1 in which the brazing material is formed from a mixture of an alloy of silver, copper and silicon mixed with titanium hydride powder.

6. A method of brazing comprising the use of a brazing material as claimed in any of claims 1 to 5.

7. A method of brazing to ceramics comprising the use of a brazing material as claimed in any of claims 1 to 5.

## Patentansprüche

1. Hartlotmaterial, bestehend aus (in Gewichtsprozent):
0,5 - 3 % Titan
0,25 - 2 % Aluminium, Zinn oder Silicium
2 - 6 % Kupfer
Rest Silber und zufällige Verunreinigungen.

2. Hartlotmaterial nach Anspruch 1, wobei es sich bei dem Hartlotmaterial um eine Legierung handelt.

3. Hartlotmaterial nach Anspruch 2, wobei die Legierung in Form einer Folie vorliegt.

4. Hartlotmaterial nach Anspruch 1, wobei das Hartlotmaterial aus einem Gemisch einer Legierung aus Silber, Kupfer und Aluminium im Gemisch mit Titanhydrid-Pulver gebildet ist.

5. Hartlotmaterial nach Anspruch 1, wobei das Hartlotmaterial aus einem Gemisch einer Legierung aus Silber, Kupfer und Silicium im Gemisch mit Titanhydrid-Pulver gebildet ist.

6. Verfahren zum Hartlöten, das die Verwendung eines Hartlotmaterials nach einem der Ansprüche 1 bis 5 umfaßt.

7. Verfahren zum Hartlöten an keramische Werkstoffe, das die Verwendung eines Hartlotmaterials nach einem der Ansprüche 1 bis 5 umfaßt.

## Revendications

1. Une matière de brasage constituée, en pourcentage en poids, de :
0,5 - 3 % de titane
0,25 - 2 % d'aluminium
2 - 6 % de cuivre
le reste étant du cuivre et les impuretés éventuelles.

2. Une matière de brasage selon la revendication 1 dans laquelle la matière de brasage est un alliage.

3. Une matière de brasage selon la revendication 2 dans laquelle l'alliage se présente sous la forme d'une feuille mince.

4. Une matière de brasage selon la revendication 1 dans laquelle la matière de brasage est formée d'un alliage d'argent, de cuivre et d'aluminium mélangé à de la poudre d'hydrure de titane.

5. Une matière de brasage selon la revendication 1 dans laquelle la matière d brasage est formée d'un alliage d'argent, de cuivre et de silicium mélangé à de la poudre d'hydrure de titane.

6. Un procédé de brasage comprenant l'utilisation d'une matière de brasage selon l'une ou l'autre des revendications 1 à 5.

7. Un procédé de brasage sur la céramique comprenant l'utilisation d'une matière de brasage selon l'une ou l'autre des revendications 1 à 5.
